# EUROPÄISCHE PATENTSCHRIFT

(11) **EP 2 530 007 B1**
(45) Veröffentlichungstag und Bekanntmachung des Hinweises auf die Patenterteilung: **04.06.2014**
(21) Anmeldenummer: 12004163.7
(22) Anmeldetag: 31.05.2012
(51) Int. Cl.: B62M 9/10

(54) **Mehrfach-Ritzelanordnung für eine Fahrradschaltung sowie Hinterrad Achsanordnung mit einer derartigen Mehrfach-Ritzelanordnung**
Multi-gear pinion assembly for a bicycle gearing system and rear wheel axle assembly with such a multi-gear pinion assembly
Agencement de pignon multiple pour un changeur de vitesses de vélo ainsi qu'agencement d'axe de roue arrière équipé d'un agencement de pignon multiple de ce type

(30) Priorität: 03.06.2011 DE 102011103489
(43) Veröffentlichungstag der Anmeldung: 05.12.2012
(73) Patentinhaber: SRAM Deutschland GmbH, 97424 Schweinfurt (DE)
(72) Erfinder: Braedt, Henrik, Dipl.-Ing., 97218 Gerbrunn (DE)

(56) Entgegenhaltungen:
- EP-A1- 2 165 927
- DE-U1-202008 005 971
- FR-A1- 2 720 367
- US-A1- 2009 243 250

## Beschreibung

Die vorliegende Erfindung betrifft eine Mehrfach-Ritzelanordnung mit einer Mehrzahl von Ritzeln mit unterschiedlichen Zähnezahlen zur Montage an einer Hinterradachse eines Fahrrads, umfassend einen Grundkörper, an dem zumindest ein Teil der Mehrzahl der Ritzel vorgesehen ist, und einen mit dem Grundkörper drehmomentübertragend verbundenen oder verbindbaren Stützring. Ferner betrifft die vorliegende Erfindung eine Hinterrad-Achsanordnung für ein Fahrrad mit einer derartigen Mehrfach-Ritzelanordnung.

Im Stand der Technik sind verschiedene Systeme zur Anbringung von Mehrfach-Ritzelanordnungen für Fahrradschaltungen an Hinterradachsen bekannt. Bei einem weit verbreiteten System ist ein Antreiber über eine Lageranordnung drehbar auf der Hinterradachse eines Fahrrads gelagert. Der Antreiber steht über eine Freilaufkupplung mit der Nabenhülse in drehmomentübertragendem Eingriff und lässt eine Drehmomentübertragung in der einen Drehrichtung (Antriebsrichtung) zu, wohingegen er in der anderen Richtung von der Nabenhülse drehentkoppelt ist, um einen Freilauf bereitzustellen. Üblicherweise wird ein derartiger Antreiber an seiner Außenumfangsfläche mit einer Keilnutverzahnung oder einem vergleichbaren Profil versehen, um hierauf einzelne Ritzel oder eine Baugruppe bestehend aus mehreren Ritzeln drehmomentübertragend anbringen zu können. Eine derartige Lösung ist beispielsweise im Stand der Technik in dem Dokument DE 199 15 436 A1 gezeigt. Vergleichbare Lösungen sind ferner in den Dokumenten JP 59-165293, GB 2 177 628 A oder EP 0 277 576 A2 gezeigt.

Obgleich dieses System weit verbreitet ist, stößt es zunehmend an seine Grenzen und weist erhebliche Nachteile auf. So wird gerade bei hochentwickelten Fahrradschaltungen, wie sie zwischenzeitlich sowohl im professionellen Radsport als auch bei Freizeitsportlern eingesetzt werden, die Anzahl der Ritzel immer größer. Dabei kommen zum Teil relativ große Abstufungen aber insbesondere auch relativ enge Abstufungen zum Einsatz, um beispielsweise eine optimale Übersetzung beim Befahren von flachem Terrain oder bei Fahrten in der Gruppe mit konstanter Trittfrequenz zu ermöglichen. In beiden Fällen, d.h. dann, wenn enge Abstufungen mit kleinen Übersetzungssprüngen vorgesehen sind, oder dann, wenn große Übersetzungssprünge bereitgestellt werden sollen, besteht zunehmender Bedarf an sehr kleinen Ritzeln, d.h. Ritzeln mit 10 Zähnen oder weniger. Derartig kleine Ritzel lassen sich aber nicht mehr auf einem Antreiber der herkömmlichen Art montieren, so dass Hilfskonstruktionen erforderlich sind, die meist zusätzliche Teile erfordern und deshalb kompliziert aufgebaut sowie schwer zu montieren sind.

Darüber hinaus bringt die klassische Antreiberlösung ein weiteres grundlegendes Problem hinsichtlich des Kraftflusses mit sich. Es ist nämlich zu berücksichtigen, dass das jeweils von der Antriebskette umschlungene Ritzel während des Antriebs starken Querkräften ausgesetzt ist, die entlang der Kette wirken. Diese Querkräfte müssen über die Lagerung des Antreibers von der Hinterradachse aufgefangen werden. Mit anderen Worten müssen die Querkräfte bei der bekannten Lösung auf den Antreiber und von diesem über die Lageranordnung auf die Hinterradachse übertragen werden. Zugleich muss aber auch das Drehmoment auf den Antreiber übertragen werden. Dies bedeutet, dass sowohl die kettenkraftbedingten Querkräfte als auch das Antriebsdrehmoment über ein und dieselbe "Schnittstelle" zwischen Ritzel bzw. Ritzelsatz und Antreiber übertragen werden müssen. Diese Schnittstelle ist üblicherweise die auf der Außenumfangsfläche des Antreibers ausgebildete Keilnutverzahnung. Es hat sich gezeigt, dass dies nachteilbehaftet ist, weil es aufgrund der auftretenden Querkräfte zu einer Verspannung der einzelnen Ritzel kommt, die sich dann negativ auf die Drehmomentübertragung auswirken kann.

Im Stand der Technik wurde bereits erkannt, dass - trotz ihrer weiten Verbreitung - die herkömmliche Lösung mit einem separat ausgebildeten Antreiber, auf dem dann einzelne Ritzel oder ein Ritzelsatz angebracht werden bzw. wird, nachteilbehaftet ist. Aus diesem Grund wurde nach Alternativen gesucht.

So zeigt beispielsweise das Dokument DE 20 2008 005 971 eine Anordnung, bei der ein Ritzelpaket einstückig mit einem Rohrelement ausgebildet ist. Das Rohrelement dient seinerseits zur Lagerung auf der Hinterradachse und weist einen Funktionsabschnitt auf, an dem die Drehmomentübertragung über die Freilaufanordnung auf die Nabenhülse erfolgt. Diese Lösung mag zwar Vorteile hinsichtlich der Lagerung des Ritzelpakets aufweisen, sie bringt aber das grundlegende Problem mit sich, dass der Kraftfluss vom größten Ritzel durch den gesamten Ritzelsatz zum kleinsten Ritzel hin und von diesem durch das Rohr zur Freilaufkupplung hin verläuft. Dies bedeutet, dass der gesamte Ritzelsatz, insbesondere auch die kleinen Ritzel, relativ massiv ausgebildet werden müssen, um diesem Kraftfluss dauerhaft standhalten zu können. Auch das Lagerrohr im Inneren des Ritzelpakets muss entsprechend solide ausgebildet sein. Dies hat zur Folge, dass die Lösung relativ massiv und damit mit hohem Gewicht ausgebildet werden muss.

Auch das Dokument DE 10 2009 006 101 A1 versucht die konventionelle Lösung eines separaten außenverzahnten Antreibers zu umgehen. Bei dieser Lösung ist wiederum ein Grundritzelsatz mit relativ vielen Ritzeln vorgesehen, der entsprechend massiv zur Kraftübertragung ausgebildet werden muss. Zusätzlich kann ein Ergänzungsritzelsatz auf diesen Grundritzelsatz aufgeschraubt werden. Wiederum zeigt sich aber, dass der gesamte Kraftfluss, insbesondere von den stark beanspruchten Ritzeln mit großem Durchmesser, durch einen relativ langen Abschnitt des Ritzelsatzes verläuft, so dass der gesamte Ritzelsatz auch im Bereich kleinerer Ritzel entsprechend massiv ausgebildet werden muss, was zu der vorstehend bereits genannten Problematik eines großen Gesamtgewichts der Anordnung führt. Darüber hinaus ist bei dieser Lösung nicht erkennbar, dass tatsächlich dem Problem der Unterbringung sehr kleiner Ritzel Rechnung getragen wurde. Auch der zusätzliche Ritzelsatz, der eher kleinere Ritzel aufweist und auf den Grundritzelsatz aufgeschraubt wird, ist derart ausgebildet, dass er radial außerhalb eines Rohrabschnitts des Grundritzelsatzes ausgebildet ist. Es ergibt sich also eine ähnliche Situation wie bei einem herkömmlichen Antreiber.

Schließlich zeigt das Dokument FR 896 001 eine gebaute Ritzelanordnung, die sich aus einer Vielzahl von Einzelteilen zusammensetzt. Im Grunde verfolgt diese Anordnung aber wiederum die Idee, insbesondere die kleinen Ritzel auf einer Art Antreiber vorzusehen, was hinsichtlich deren Dimensionierung mit wenig Zähnen im Wege steht.

Dokument FR 2 720 367 A1 offenbart die Präambel des Anspruchs 1.

Es ist eine Aufgabe der vorliegenden Erfindung, eine Mehrfach-Ritzelanordnung der eingangs bezeichneten Art und eine hiermit ausgebildete Hinterrad-Achsanordnung bereitzustellen, die den vorstehend geschilderten Problemen Rechnung trägt und die die bei herkömmlichen Systemen bekannten Probleme hinsichtlich des Kraftflusses löst.

Diese Aufgabe wird durch eine Mehrfach-Ritzelanordnung der eingangs bezeichneten Art gelöst, bei der vorgesehen ist, dass der Grundkörper und der Stützring an ihrem radial inneren Bereich jeweils mit einem radialen inneren Lagerabschnitt zum drehbaren Lagern auf einer Hinterradachse des Fahrrads ausgebildet sind und dass der Stützring wenigstens eine zusätzlich zu dem Lagerabschnitt ausgebildete Angriffsformation zum Übertragen eines Drehmoments von der Mehrfach-Ritzelanordnung auf einen Nabenkörper des Hinterrads aufweist.

Erfindungsgemäß wird der Grundkörper unmittelbar, d.h. ohne Zwischenschaltung eines Antreibers auf der Hinterrad-Achse des Fahrrads gelagert. Hierzu können verschiedene Lageranordnungen dienen, beispielsweise Wälzlager oder auch Gleitlager, sofern Letztere hinreichend hochwertig ausgebildet sind. Dadurch ist es möglich, am Grundkörper erheblich kleinere Ritzel auszubilden, mit entsprechend kleinen Zähnezahlen, als beim Stand der Technik, bei dem radial innerhalb des Ritzelsatzes bzw. radial innerhalb einzelner Ritzel noch der Antreiber zur Aufnahme der jeweiligen Ritzel vorgesehen ist. Insofern trägt die Erfindung bereits der Forderung nach kleinen Ritzeln mit geringen Zähnezahlen Rechnung.

Darüber hinaus hat die Erfindung aber den weiteren Vorteil, dass der Kraftfluss optimiert ist. Die Querkräfte, die auf das jeweilige mit der Antriebskette in Eingriff stehende Ritzel übertragen werden, können unmittelbar und aufgeteilt auf die beiden Lagerabschnitte von Grundkörper und Stützring auf die Hinterradachse übertragen werden. Diese Querkraftübertragung und der zugeordnete Kraftfluss sind unabhängig von der Drehmomentübertragung von dem Grundkörper bzw. Stützring zum Nabenkörper hin. Mit anderen Worten ist die Schnittstelle zur Querkraftübertragung räumlich getrennt ausgebildet von der Schnittstelle zur Drehmomentübertragung, was erhebliche Vorteile mit sich bringt. Deformationen einzelner Ritzel aufgrund der durch die Kette aufgebrachten Querkraft sind somit für die Drehmomentübertragung unerheblich. Insbesondere kann verhindert werden, dass querkraftbedingte Verspannungen in der Schnittstelle zur Freilaufkupplung oder unmittelbar in der Freilaufkupplung auftreten. Die Schnittstelle zwischen der Mehrfach-Ritzelanordnung und dem Nabenkörper zur Drehmomentübertragung kann also speziell und allein für diese Drehmomentübertragung optimiert werden und es muss bei dieser Optimierung keine Rücksicht darauf genommen werden, dass entsprechende Querkräfte auftreten. Mit anderen Worten lässt sich die Angriffsformation, die separat vom Lagerabschnitt ausgebildet ist, für die Drehmomentübertragung von der Mehrfach-Ritzelanordnung auf den Nabenkörper des Hinterrads optimieren. Dies hat auch Vorteile bei der Gewichtseinsparung.

Gemäß einer Weiterbildung der Erfindung kann vorgesehen sein, dass die Angriffsformation radial außerhalb des Lagerabschnitts angeordnet ist. So ist es möglich, die Angriffsformation in einem Bereich anzuordnen, der zur Drehmomentübertragung besser geeignet ist, als der radial relativ weit innen liegende Bereich eines Antreibers gemäß dem Stand der Technik. Dabei ist zu berücksichtigen, dass aufgrund der kleinen Hebelarme die auftretenden Kräfte größer werden, je näher sich die Angriffsformation an der Drehachse befindet. Diese Gesetzmäßigkeit lässt sich durch die vorliegende Erfindung dahingehend ausnützen, dass die Angriffsformation in einem Bereich radial außerhalb des Lagerabschnitts angeordnet wird, also weiter außen als beim Stand der Technik, um so den Betrag der auftretenden Kräfte und damit verbundene Flächenpressungen, Verschleiß sowie unerwünschte Deformationen gering zu halten.

Eine Weiterbildung der Erfindung sieht vor, dass der Stützring als Angriffsformation wenigstens eine Ausnehmung aufweist, die dazu ausgebildet ist, zur Drehmomentübertragung zumindest teilweise einen Drehmomentübertragungskörper aufzunehmen. Alternativ ist es möglich, dass der Stützring als Angriffsformation wenigstens einen Vorsprung aufweist, der dazu ausgebildet ist, zur Drehmomentübertragung mit einer korrespondierenden Ausnehmung an einem Drehmomentübertragungskörper zusammen zu wirken. Dabei ist es möglich, dass der Stützring und der Drehmomentübertragungskörper formschlüssig in gegenseitigem Eingriff stehen. Der Stützring und der Drehmomentübertragungskörper können in axialer Richtung oder in radialer Richtung ineinander eingreifen.

Ferner kann erfindungsgemäß vorgesehen sein, dass der Drehmomentübertragungskörper mit einem Freilauf versehen ist, über den er mit dem Nabenkörper richtungsselektiv drehmomentübertragend verbindbar ist. Wiederum gilt hier, dass der Drehmomentübertragungskörper speziell für die Drehmomentübertragung optimiert ist. Eine Rücksichtnahme auf die auftretenden Querkräfte, wie sie für einen Antreiber gemäß dem Stand der Technik erforderlich ist, ist in diesem Zusammenhang nicht erforderlich, insbesondere nicht in dem Bereich, in dem der Freilauf angeordnet ist. Der Begriff richtungsselektiv bedeutet, dass eine Drehung in Antriebsrichtung eine Drehmomentübertragung bewirkt und in entgegengesetzter Richtung einen Freilauf zulässt.

Eine Weiterbildung der Erfindung sieht vor, dass der Lagerabschnitt zur Aufnahme eines Lagers, insbesondere eines Wälzlagers ausgebildet ist. Es ist aber auch möglich, dass der Lagerabschnitt zur Aufnahme eines Lagerrings ausgebildet ist, an dem ein Lager anbringbar ist. Mit anderen Worten muss der Lagerabschnitt nicht unmittelbar ein Lager, beispielsweise ein Wälzlager, aufnehmen. Dies kann auch durch Zwischenschaltung einer Komponente wie den Lagerring erfolgen, der mit einer Passung in den Lagerabschnitt eingesetzt ist.

Ferner kann vorgesehen sein, dass der Lagerring zur Fixierung des Grundkörpers an der Hinterradachse in diesen einsteckbar ist. Der Lagerring kann beispielsweise als Sicherungselement für den Grundkörper an der Hinterradachse dienen.

In diesem Zusammenhang kann ferner ein Verbindungsrohr vorgesehen sein, das sich vom Stützring zu dem Grundkörper erstreckt. Dieses Verbindungsrohr kann auf Zug belastet werden, insbesondere indem der Lagerring über eine Gewindeformation mit einer Gegengewindeformation des Verbindungsrings verschraubbar ist. Das Verbindungsrohr kann bei dieser Konstruktion also als Zugkörper eingesetzt werden, um die Anordnung axial zu verspannen. Es ist einenends mit dem Stützring verbunden oder an diesem angeformt und dient anderenends beispielsweise zur Anbringung des Lagerrings über die Gewindeformation und die Gegengewindeformation, die je nach Bedarf stärker oder weniger stark ineinander geschraubt werden können.

Ferner kann in diesem Zusammenhang vorgesehen sein, dass der Lagerring mit einer Gegenangriffsformation versehen ist, die zur Drehmomentübertragung mit der Angriffsformation in Eingriff bringbar ist. Dies bedeutet, dass der Lagerring speziell als Drehmomentübertragungskörper ausgebildet sein kann, der das Drehmoment von dem Stützring aufnimmt und an die Freilaufkupplung überträgt.

Erfindungsgemäß ist es ferner möglich, dass der Grundkörper konisch ausgebildet ist und an seinem Außenumfang einen Teil der Mehrzahl von Ritzeln aufweist. Dabei kann vorgesehen sein, dass der Grundkörper einstückig ausgebildet ist oder aus einer Mehrzahl von fest miteinander verbundenen Bauteilen zusammengesetzt ist. In diesem Zusammenhang ist es auch möglich, dass der Stützring mit dem Grundkörper verpresst, verschraubt oder verklebt ist. Dadurch ergibt sich eine fertig montierbare Baugruppe, die entsprechend der Beanspruchung ausgelegt ist. Der durchmessergroße Stützring lässt sich so relativ stabil ausbilden. Die weniger stark beanspruchten Abschnitte des Grundkörpers, die Ritzel kleineren Durchmessers aufweisen, können entsprechend schwächer und damit auch leichter ausgebildet werden. In diesem Zusammenhang kann vorgesehen sein, dass an dem Stützring wenigstens ein Ritzel der Mehrzahl von Ritzeln angeordnet ist. Zusätzlich oder alternativ ist es möglich, dass der Stützring zum Anbringen wenigstens eines weiteren Ritzels ausgebildet ist. Wie vorstehend angedeutet, sind die Stützring-nahen Ritzel mit größerem Durchmesser dimensioniert.

Die Erfindung betrifft ferner eine Hinterrad-Achsanordnung für ein Fahrrad mit einer Hinterradachse, die zur Befestigung an einem Fahrradrahmen ausgebildet ist, einen auf der Hinterachse drehbar gelagerten Nabenkörper, eine mit einer Antriebskette zusammenwirkenden Mehrfach-Ritzelanordnung nach einem der vorangehenden Ansprüche, und eine Drehmomentübertragungsanordnung zum richtungsselektiven Übertragen eines Drehmoments von der Mehrfach-Ritzelanordnung zu dem Nabenkörper, um den Nabenkörper anzutreiben, wobei die Mehrfach-Ritzelanordnung auf der Hinterradachse drehbar gelagert ist und wobei die Drehmomentübertragung auf die Drehmomentübertragungsanordnung von der Drehlagerung räumlich getrennt ausgebildet ist.

Die Erfindung wird im Folgenden beispielhaft anhand der beiliegenden Figuren erläutert. Es stellen dar:
- Fig. 1: eine achsenthaltende Schnittansicht einer ersten Ausführungsvariante einer erfindungsgemäßen Hinterrad-Achsanordnung mit einer erfindungsgemäßen Mehrfach-Ritzelanordnung;
- Fig. 2: die Ansicht gemäß Fig. 2 in perspektivischer Darstellung;
- Fig. 3: die Mehrfach-Ritzelanordnung gemäß Fig. 1 in Einzelteildarstellung;
- Fig. 4: die Mehrfach-Ritzelanordnung gemäß Fig. 2 in Einzelteildarstellung;
- Fig. 5: eine perspektivische Ansicht einer zweiten Ausführungsform der Erfindung;
- Fig. 6: die Mehrfach-Ritzelanordnung der zweiten Ausführungsform der Erfindung in geschnittener perspektivischer Darstellung; und
- Fig. 7: die Mehrfach-Ritzelanordnung gemäß Fig. 6 in Schnittdarstellung.

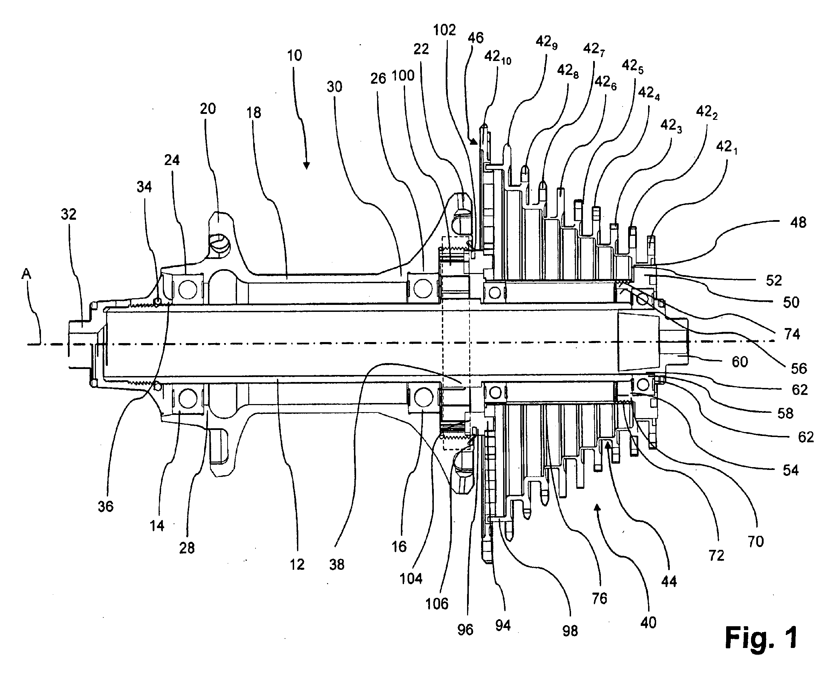

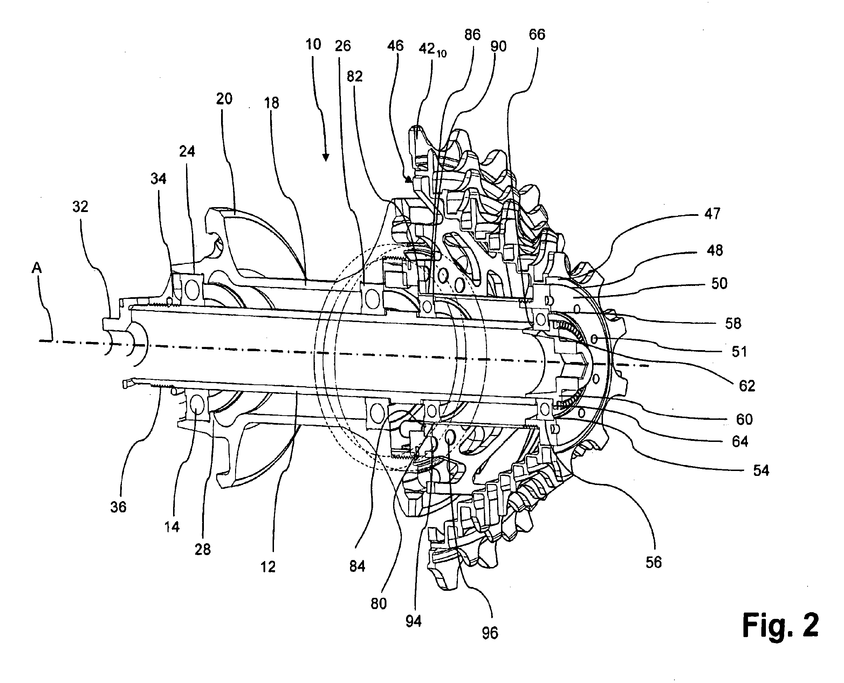

In Fig. 1 und 2 ist eine erfindungsgemäße Hinterrad-Achsanordnung für ein Fahrrad im Schnitt gezeigt und allgemein mit 10 bezeichnet. Diese weist einen Hinterrad-Achskörper 12 auf, der sich entlang einer Längsachse A erstreckt. Der Hinterrad-Achskörper 12 ist in nicht dargestellter Weise an einem Fahrradrahmen anbringbar. Auf dem Hinterrad-Achskörper 12 ist über zwei Wälzlager 14, 16 ein Nabenkörper 18 drehbar gelagert. Der Nabenkörper 18 weist zwei Flanschabschnitte 20, 22 auf, an denen Speichen zur drehmomentübertragenden Verbindung mit einer nicht gezeigten Felge anbringbar ist.

Die Lager 14, 16 sind in jeweiligen Lagerausnehmungen 24, 26 aufgenommen und liegen mit ihren radial äußeren Lagerringen zur Positionierung an radial einwärts stehenden Kragen 28, 30 des Nabenkörpers 18 an. Auf den Achskörper 12 ist in Fig. 1 auf der linken Seite eine Dichtungsmutter 32 mit einem Dichtungselement 34 aufgeschraubt. Diese Dichtungsmutter 32 weist einen Ansatz 36 auf, der den radial inneren Lagerring des Wälzlagers 14 auf dem Achskörper 12 positioniert. Das andere Lager 16 wird über einen radialen Vorsprung 38 an seinem radial inneren Lagerring positioniert.

Nahe dem rechten Nabenflansch 22 ist eine Mehrfach-Ritzelanordnung 40 angebracht. Diese weist im dargestellten Ausführungsbeispiel zehn Ritzel auf, die sich von rechts nach links in zunehmender Größe erstrecken. Die Ritzel sind mit dem Bezugszeichen 42₁ bis 42₁₀ bezeichnet. Die Ritzelanordnung 40 weist einen Grundkörper 44 auf, der die einzelnen Ritzel 42₁ bis 42₉ aufweist. Der Grundkörper 44 ist mit einem Stützring 46 fest verbunden, an dessen radial äußerem Umfang Zähne zur Ausbildung des durchmessergrößten Ritzels 42₁₀ ausgebildet sind. Der Grundkörper 44 weist eine gestuft konische Struktur auf, wie in der Schnittdarstellung gemäß Fig. 1 gut zu erkennen ist.

An seinem in Fig. 1 rechten Ende ist der Grundkörper 44 innerhalb eines verstärkten Ringabschnitts 47 (Fig. 2) mit einer Aufnahmeausnehmung 48 versehen. Dieser Ringabschnitt 47 mit der Ausnehmung 48 dient als Lagerabschnitt, in der ein Lagerring 50 aufgenommen ist. Der Lagerring 50 weist, wie in Fig. 2 zu erkennen ist, in regelmäßigen Abständen in Umfangsrichtung ausgebildete Ausnehmungen 51 auf, in die ein Montagewerkzeug eingreifen kann. Dieser Lagerring 50 ist mit einer im Wesentlichen spielfreien Passung in der Aufnahmeausnehmung 48 aufgenommen, so dass sich der Grundkörper 44 mit seinem in Fig. 1 rechten Ende auf diesem Lagerring 50 abstützt. Die axiale Position des Lagerrings 50 relativ zum Grundkörper 44 ist durch einen am Grundkörper 44 angeformten radial einwärts vorstehenden Kragen 52 vorgegeben. Mit anderen Worten lässt sich der Lagerring 50 relativ zum Grundkörper 44 nicht über diesen Kragen 52 in axialer Richtung hinweg verlagern.

Der Lagerring 50 wiederum weist einen radial einwärts vorspringenden Kragen 54 auf, der im Wesentlichen orthogonal zu einer radial einwärts gerichteten Umfangsfläche 56 verläuft. Der Kragen 54 und die Umfangsfläche 56 bilden einen Aufnahmebereich für ein weiteres Wälzlager 58, mit dem sich das in Fig. 1 rechte Ende des Grundkörpers 44 unter Vermittlung des Lagerrings 50 am Achskörper 12 abstützt. Hierfür ist eine Stützmutter 60 vorgesehen, die in den Achskörper 12 einschraubbar oder einpressbar ist, und die an ihrem radial äußeren Umfang eine Lagerfläche 62 trägt, auf der sich das Lager 58 spielfrei abstützt. Auch die Stützmutter 60 weist einen radial auswärts gerichteten Kragen 64 auf, der ein Verrutschen des Lagers 58 in axialer Richtung verhindert. Am anderen axialen Ende des Lagers 58 stützt sich dieses an der Stirnfläche 66 des Achskörpers 12 ab.

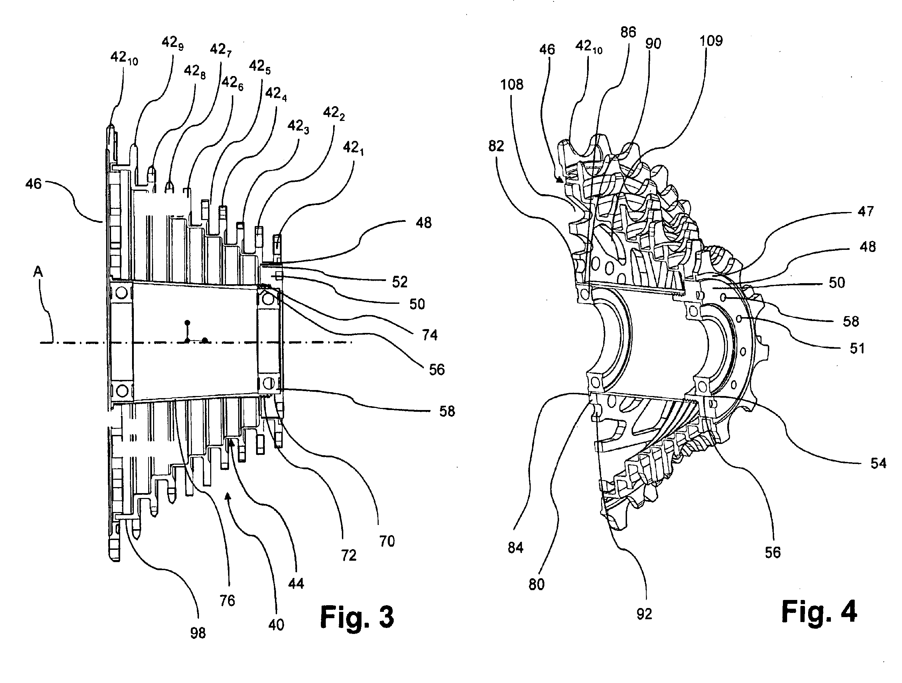

Ferner erkennt man in den Fig. 1 bis 4, dass der Lagerring 50 einen axialen Ansatz 70 aufweist. Dieser ist an seiner Außenumfangsfläche mit einer Außengewindeformation 72 versehen. Diese Außengewindeformation 72 ist mit einem Innengewinde 74 eines Verbindungsrohrs 76 verschraubt. Das Verbindungsrohr 76 ist mit einer spielfreien Passung in einen als Lagerabschnitt dienenden radial inneren Bereich des Stützrings 46 mit einer Öffnung 80 eingesteckt. Dabei fällt auf, dass der Stützring 46 eine abgestuften Bohrung 82 aufweist, die zur Aufnahme eines durchmessererweiterten Flanschabschnitts 84 an den Fig. 1 und 2 linken Ende des Verbindungsrohrs 76 dient. An der Innenumfangsfläche des Verbindungsrohrs 76 an dessen in Fig. 1 und 2 linken Ende ist ein geringfügig durchmesservergrößerter Aufnahmeabschnitt 86 vorgesehen, in den mit einer spielfreien Passung ein weiteres Wälzlager 90 eingesetzt ist. Über dieses Wälzlager 90 stützt sich der Stützring 46 unter Vermittlung des in Fig. 2 linken Verbindungsrohrabschnitts auf dem Achskörper 12 ab.

In den Fig. 1 bis 4 erkennt man ferner, dass der Stützring 46 in seinem radial inneren Bereich, jedoch beabstandet von der Lagerfläche 80 mit einer Mehrzahl von in Umfangsrichtung in regelmäßigen Abständen verlaufenden kreisförmigen Öffnungen 92 versehen ist. Diese Öffnungen dienen zur Aufnahme von zapfenartigen Vorsprüngen 94, die an einem Drehmomentübertragungsteil 96 angeordnet sind. Die zapfenartigen Vorsprünge 94 sind formschlüssig und im Wesentlichen spielfrei in den Ausnehmungen 92 aufgenommen. Das Drehmomentübertragungsteil 96 dient dann wiederum als Schnittstelle zu einer Freilaufkupplung, die sich im Bereich 100 einer radial inneren Ausnehmung im durchmessergrößeren Speichenflansch 22 des Nabenkörpers 18 befindet. Ferner erkennt man in den Figuren einen Dichtungsring 102, der an dem Drehmomentübertragungsteil 96 angebracht ist, in dem er in eine Umfangsnut 104 eingesetzt ist. Dieser Dichtungsring 102 gleitet an einer konisch verlaufenden Dichtungsfläche 106 dichtend ab, die in Form eines Einstichs an dem Nabenkörper 18 ausgebildet ist.

Zu ergänzen ist, dass bei dieser Ausführungsvariante zur Einsparung von Gewicht eine Vielzahl von Öffnungen 108, 109 im Stützring 46 vorgesehen ist.

Zur Montage der erfindungsgemäßen Anordnung wird zunächst der Nabenkörper 18 in an sich bekannter Weise von links auf den Achskörper 12 mit den Lagern 14 und 16 aufgesetzt und über die Mutter 32 verspannt. Von rechts wird sodann die Baugruppe bestehend aus Stützring 46, Grundkörper 40, eingestecktes Verbindungsrohr 76 sowie Lager 90 zusammen mit dem Drehmomentübertragungsteil 94 und der nicht im Detail gezeigten Freilaufkupplung im Bereich 100 eingesteckt. Daraufhin wird der Lagerring 50 mit seinem Außengewinde 72 in die Innengewindeformation 74 des Verbindungsrohrs 76 eingeschraubt und hinreichend verspannt. Dadurch wird das Lager 58 positioniert. Schließlich wird das Stützteil 60 im Inneren des Nabenkörpers 12 angebracht.

Die Erfindung hat den Vorteil, dass der Stützring 46 mit seinem durchmessergroßen mechanisch stark belasteten Ritzel 42₁₀ relativ stabil ausgebildet werden kann. Mit anderen Worten kann der Stützring 46 als diejenige Komponente, an der hebelarmbedingt die größten Drehmomente auftreten, entsprechend stabil ausgebildet werden. Die verbleibenden Ritzel 42₁ bis 42₉ des Grundkörpers 44 können entsprechend schwächer und damit hinsichtlich der Gewichtseinsparung günstiger ausgebildet werden. Der Stützring 46 ist in an sich bekannter Weise über vorspringende Stifte 98 mit dem Grundkörper verpresst, verklebt oder anderweitig verbunden.

Die durch die Kraftübertragung über die Antriebskette entstehenden Querkräfte an den einzelnen Ritzeln 42₁ bis 42₁₀ können über die beiden Lager 58 und 90 unmittelbar von der Mehrfach-Ritzelanordnung 40 auf den Achskörper 12 übertragen werden. Mit anderen Worten stützt sich die Mehrfach-Ritzelanordnung 40 sozusagen über eine eigenständige Lageranordnung, die die beiden Wälzlager 58 und 90 aufweist, am Achskörper 12 ab. Die Drehmomentübertragung von der der Mehrfachritzelanordnung 40 auf den Nabenkörper 18 und damit der zur Drehmomentübertragung erforderliche Kraftfluss erfolgt unabhängig von dieser Lageranordnung. Hierzu sind die Ausnehmungen 92 und die darin eingreifenden Zapfen 94 des Drehmomentübertragungskörpers 96 vorgesehen. Der Drehmomentübertragungskörper 96 lässt sich bei dieser Ausführungsvariante allein mit Blick auf die Drehmomentübertragung optimieren. Die Drehmomentübertragung erfolgt räumlich unabhängig von den an der Mehrfachritzenanordnung 40 auftretenden Querkräften.

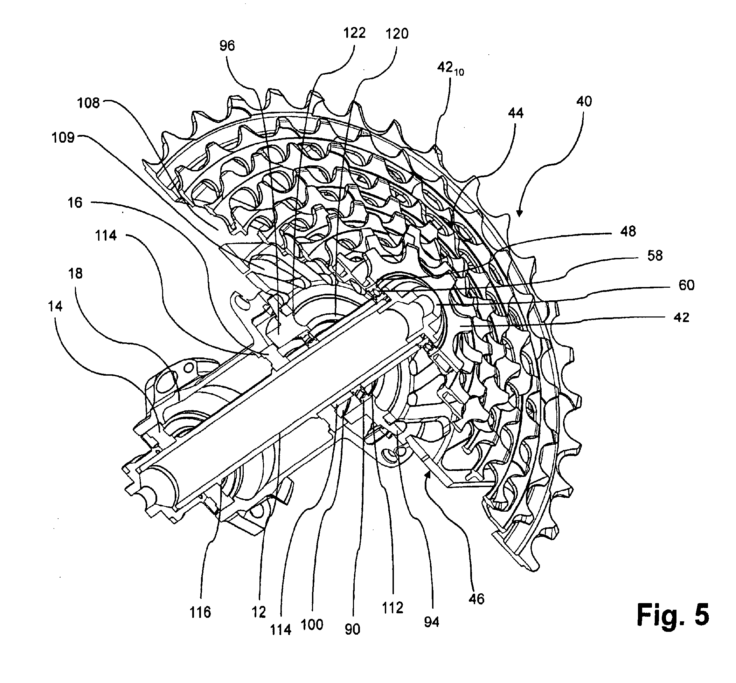

Fig. 5 bis 7 zeigen eine zweite Ausführungsform der Erfindung. Zur Beschreibung dieser Ausführungsform der Erfindung werden für gleichartige oder gleichwirkende Komponenten dieselben Bezugszeichen verwendet, wie bei der Beschreibung der ersten Ausführungsform gemäß Fig. 1 bis 4.

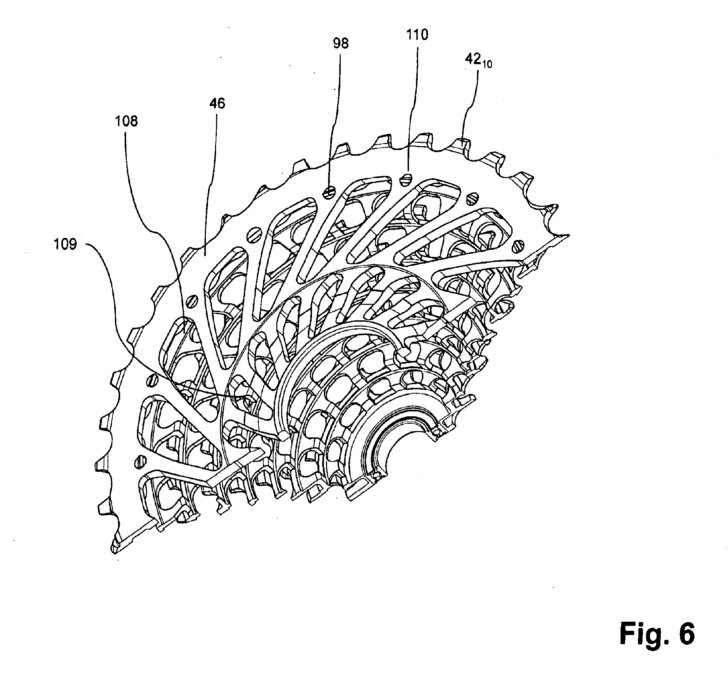

Diese Ausführungsform der Erfindung kommt ohne Verbindungsrohr aus. Man erkennt insbesondere in Fig. 5, dass wiederum der Grundkörper 44 mit den Ritzeln 42₁ bis 42₉ im Wesentlichen einstückig ausgebildet ist und mit dem Stützkörper 46 und an dessen Außenumfang ausgebildetem Ritzel 42₁₀ in an sich bekannter Weise verbunden ist. Fig. 6 zeigt wie hierzu die Stifte 98 in entsprechende Ausnehmungen 110 eingreifen und mit diesen fest verpresst sind. Der Grundkörper 44 weist an seinem in den Figuren rechten Ende wiederum einen Aufnahmeabschnitt 48 auf. In Abweichung zu der Ausführungsform gemäß Fig. 1 bis 4 ist jedoch kein zusätzlicher Lagerring aufgenommen, sondern unmittelbar das rechte Wälzlager 58. Dadurch ist es möglich, die kleinen Ritzel 42₁, 42₂, ... 42₉ dieser Mehrfach-Ritzelanordnung 40 noch kleiner und mit noch weniger Zähnen auszubilden, als bei der Ausführungsform gemäß Fig. 1 bis 4 und insbesondere als bei den Ausführungsformen gemäß dem Stand der Technik.

Bei der gezeigten Ausführungsform weist das kleinste Ritzel 42₁ lediglich neun Zähne auf. Die Anbringung des Lagers 58 am Achskörper 12 ist ähnlich der Ausgestaltung gemäß den Fig. 1 bis 4. Wiederum dient eine Stützschraube 60 dazu, das Lager 58 auf dem Achskörper 12 zu halten. Ferner erkennt man eine Positionierhülse 112. Diese ist im Wesentlichen spielfrei auf dem Außenumfang des Achskörpers 12 angebracht und bestimmt einen axialen Abstand zwischen dem Lager 58 und dem zweiten Wälzlager 90. Eine weitere Positionierhülse 114 ist zwischen dem Wälzlager 16 zur Lagerung des Nabenkörpers 18 und dem zweiten Wälzlager 90 angeordnet. Bei dieser Ausführungsvariante stützt sich das Lager 16 auf dem Achskörper 12 an einer Schulter 114 ab. Das Lager 14 stützt sich auf dem Achskörper an einer weiteren Schulter 116 ab.

Betrachtet man die Drehmomentübertragung, so erkennt man, dass auch bei dieser Ausführungsvariante zur Einsparung von Gewicht eine Vielzahl von Öffnungen 108, 109 am Stützring 46 vorgesehen ist. Die radial inneren Öffnungen 109 sind weiter radial einwärts gezogen als bei der ersten Ausführungsvariante und der radial innere Abschnitt dienen zur Aufnahme der Zapfen 94 des Drehmomentübertragungskörpers 96. Bei dieser Ausführungsvariante ist der Drehmomentübertragungskörper 96 jedoch zusätzlich zu seiner Funktion als Schnittstelle für die nicht im Detail dargestellte Freilaufkupplung im Raum 100 auch noch mit einem Abschnitt als Lagerring ausgebildet. Hierzu weist der Drehmomentübertragungskörper 96 radial innerhalb der Zapfen 94 einen axialen Ansatz 120 auf, dessen Außenumfangsfläche 122 dazu dient, im Wesentlichen spielfrei mit einer entsprechenden Passung die Innenumfangsfläche des Stützrings 46 aufzunehmen und diese zu lagern. Im Inneren des Drehmomentübertragungskörpers 96 ist im Wesentlichen spielfrei mit einer PAssung das Lager 90 aufgenommen. Am Drehmomentübertragungskörper 96 ist ferner ein axialer Flansch 124 vorgesehen, der zur Positionierung des Lagers 90 in axialer Richtung in Fig. 5 nach rechts dient.

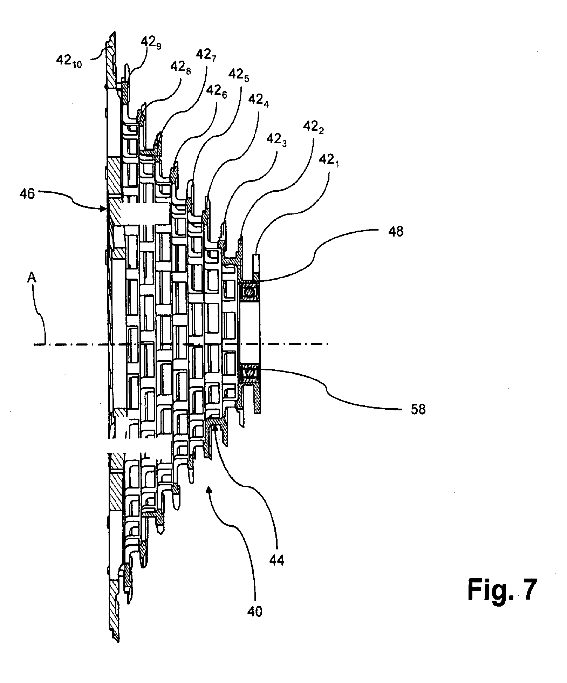

Der Unterschied der zweiten Ausführungsform gemäß Fig. 5 und 7 zur ersten Ausführungsform besteht also darin, dass das Verbindungsrohr 76 eingespart wurde und dass im Bereich der kleinen Ritzel die Lagerung ohne Zwischenschaltung eines Lagerrings erfolgt, so dass noch kleiner Ritzel eingesetzt werden können. Im Bereich des Stützrings ist hingegen ein zusätzlicher Lagerring 120 vorgesehen, der zur Übertragung der Lagerkräfte vom Stützring auf das Lager 90 dient.

Wiederum ergeben sich aber die bereits geschilderten Vorteile einer größeren Freiheit bei der Wahl der Ritzeldurchmesser, eines erheblich besseren Kraftflusses und einer räumlichen Trennung von Querkraft und zur Drehmomentübertragung erforderlicher Kraft. Dies gilt auch für die zweite Ausführungsvariante, weil dort das Drehmomentübertragungsteil 96 mit unterschiedlichen Funktionsabschnitten ausgebildet ist, nämlich den Zapfen 40 zur Drehmomentübertragung auf die Freilaufkupplung einerseits und dem radial innerhalb davon und räumlich getrennt ausgebildeten Axialansatz 120 zur Querkraft(Lagerkraft)-Übertragung.

Der wesentliche Vorteil sämtlicher Ausführungsformen der Erfindung besteht darin, dass über das Drehmomentübertragungsteil 94 zur Freilaufkupplung nur Drehmomente übertragen werden und die Querkräfte bereits über die separate Lageranordnung 58 und 90 hiervon unabhängig abgeleitet werden. Querkräfte, die insbesondere bei einer Schrägstellung der Kette auftreten und eine besonders starke Belastung auf die eingebundenen Komponenten ausüben, können somit von der Drehmomentübertragung ausgeklammert werden.

Ergänzt sei angemerkt, dass die verschiedenen Prinzipien der beiden Ausführungsbeispiele gemäß Fig. 1 bis 7 auch untereinander ausgetauscht werden können. So ist es gleichsam möglich, einen Drehmomentübertragungskörper 96, wie er im Ausführungsbeispiel gemäß Fig. 5 eingesetzt ist, bei der Ausführungsvariante gemäß Fig. 1 einzusetzen. Gleichermaßen ist es möglich, unter Einsparung des Lagerrings 50 eine Lageranordnung zur Aufnahme des Lagers 58 gemäß Fig. 5 bei der Ausführungsform gemäß Fig. 1 anzuordnen. Hierdurch können die mit der jeweiligen Konstruktion verbundenen Vorteile erreicht werden.

## Patentansprüche

1. Mehrfach-Ritzelanordnung (40) mit einer Mehrzahl von Ritzeln (42₁-42₁₀) mit unterschiedlichen Zähnezahlen zur Montage an einer Hinterradachse (12) eines Fahrrads, umfassend
- einen Grundkörper (44), an dem zumindest ein Teil der Mehrzahl der Ritzel (42₁-42₁₀) vorgesehen ist,
- einen mit dem Grundkörper (44) drehmomentübertragend verbundenen oder verbindbaren Stützring (46),
**dadurch gekennzeichnet, dass** der Grundkörper (44) und der Stützring (46) an ihrem radial inneren Bereich jeweils mit einem radialen inneren Lagerabschnitt zum drehbaren Lagern auf der Hinterradachse (12) des Fahrrads ausgebildet sind und dass der Stützring (46) wenigstens eine zusätzlich zu dem Lagerabschnitt ausgebildete Angriffsformation (92) zum Übertragen eines Drehmoments von der Mehrfach-Ritzelanordnung (44) auf einen Nabenkörper (18) aufweist.

2. Mehrfach-Ritzelanordnung (40) nach Anspruch 1,
**dadurch gekennzeichnet, dass** die Angriffsformation (92) radial außerhalb des Lagerabschnitts angeordnet ist.

3. Mehrfach-Ritzelanordnung (40) nach Anspruch 1 oder 2,
**dadurch gekennzeichnet, dass** der Stützring (46) als Angriffsformation (92) wenigstens eine Ausnehmung aufweist, die dazu ausgebildet ist, zur Drehmomentübertragung zumindest teilweise einen Drehmomentübertragungskörper (94) aufzunehmen.

4. Mehrfach-Ritzelanordnung (40) nach Anspruch 1 oder 2,
**dadurch gekennzeichnet, dass** der Stützring als Angriffsformation wenigstens einen Vorsprung aufweist, der dazu ausgebildet ist, zur Drehmomentübertragung mit einer korrespondierenden Ausnehmung an einem Drehmomentübertragungskörper zusammen zu wirken.

5. Mehrfach-Ritzelanordnung (40) nach Anspruch 3 oder 4,
**dadurch gekennzeichnet, dass** der Stützring (46) und der Drehmomentübertragungskörper formschlüssig in gegenseitigem Eingriff stehen.

6. Mehrfach-Ritzelanordnung (40) nach einem der Ansprüche 3 bis 5,
**dadurch gekennzeichnet, dass** der Drehmomentübertragungskörper (96) mit einer Freilaufkupplung versehen oder gekoppelt ist, über die er mit dem Nabenkörper (18) richtungsselektiv drehmomentübertragend verbindbar ist.

7. Mehrfach-Ritzelanordnung (40) nach einem der vorangehenden Ansprüche,
**dadurch gekennzeichnet, dass** der Lagerabschnitt zur Aufnahme eines Lagers (58, 90), insbesondere eines Wälzlagers ausgebildet ist.

8. Mehrfach-Ritzelanordnung (40) nach einem der Ansprüche 1 bis 6,
**dadurch gekennzeichnet, dass** der Lagerabschnitt zur Aufnahme eines Lagerrings (50, 120) ausgebildet ist, an dem ein Lager (58, 90) anbringbar ist.

9. Mehrfach-Ritzelanordnung (40) nach Anspruch 8,
**dadurch gekennzeichnet, dass** der Lagerring (50) zur Fixierung des Grundkörpers (44) an der Hinterradachse (12) in diesen einsteckbar ist.

10. Mehrfach-Ritzelanordnung (40) nach Anspruch 8 oder 9,
**gekennzeichnet durch** ein Verbindungsrohr (76), das sich vom Stützring (46) zu dem Grundkörper (44) erstreckt.

11. Mehrfach-Ritzelanordnung (40) nach Anspruch 10,
**dadurch gekennzeichnet, dass** das Verbindungsrohr (76) auf Zug belastet ist.

12. Mehrfach-Ritzelanordnung (40) nach Anspruch 10 oder 11,
**dadurch gekennzeichnet, dass**
der Lagerring (50) über eine Gewindeformation (70) mit einer Gegengewindeformation (74) des Verbindungsrohrs (76) verschraubbar ist.

13. Mehrfach-Ritzelanordnung (40) nach einem der Ansprüche 8 bis 12,
**dadurch gekennzeichnet, dass** der Lagerring (120) mit einer Gegenangriffsformation (94) versehen ist, die zur Drehmomentübertragung mit der Angriffsformation (92) in Eingriff bringbar ist.

14. Mehrfach-Ritzelanordnung (40) nach einem der vorangehenden Ansprüche,
**dadurch gekennzeichnet, dass** der Grundkörper (44) konisch ausgebildet ist und an seinem Außenumfang einem Teil der Mehrzahl von Ritzeln (42₁-42₉) aufweist.

15. Mehrfach-Ritzelanordnung (40) nach einem der vorangehenden Ansprüche,
**dadurch gekennzeichnet, dass** der Grundkörper (44) einstückig ausgebildet ist oder aus einer Mehrzahl von fest miteinander verbunden Bauteilen zusammengesetzt ist.

16. Mehrfach-Ritzelanordnung (40) nach einem der vorangehenden Ansprüche,
**dadurch gekennzeichnet, dass** der Stützring (46) mit dem Grundkörper (44) verpresst, verschraubt oder verklebt ist.

17. Mehrfach-Ritzelanordnung (40) nach einem der vorangehenden Ansprüche,
**dadurch gekennzeichnet, dass** an dem Stützring (46) wenigstens ein Ritzel (42₁₀) der Mehrzahl von Ritzeln angeordnet ist.

18. Mehrfach-Ritzelanordnung (40) nach einem der vorangehenden Ansprüche,
**dadurch gekennzeichnet, dass** der Stützring (46) zum Anbringen wenigstens eines weiteren Ritzels ausgebildet ist.

19. Hinterrad-Achsanordnung (10) für ein Fahrrad mit
- einer Hinterradachse (12), die zur Befestigung an einem Fahrradrahmen ausgebildet ist,
- einen auf der Hinterachse (12) drehbar gelagerten Nabenkörper (18),
- eine mit einer Antriebskette zusammenwirkenden Mehrfach-Ritzelanordnung (40) nach einem der vorangehenden Ansprüche, und
- eine Drehmomentübertragungsanordnung (96) zum richtungsselektiven Übertragen eines Drehmoments von der Mehrfach-Ritzelanordnung (44) zu dem Nabenkörper (18), um den Nabenkörper (18) anzutreiben,
wobei die Mehrfach-Ritzelanordnung (40) auf der Hinterradachse (12) drehbar gelagert ist und wobei die Drehmomentübertragung auf die Drehmomentübertragungsanordnung (96) von der Drehlagerung (58, 90) räumlich getrennt ausgebildet ist.

## Claims

1. Multi-gear pinion assembly (40) with a plurality of pinions (42₁-42₁₀) having different numbers of teeth for mounting on a rear-wheel axle (12) of a bicycle, comprising
- a basic body (44), on which at least some of the plurality of pinions (42₁-42₁₀) are provided,
- a supporting wing (46) connected or connectable to the basic body (44) in a torque-transmitting manner,
**characterized in that** the basic body (44) and the supporting ring (46) are in each case designed at their radially inner region with a radial inner bearing portion for rotatable mounting on the rear-wheel axle (12) of a bicycle, and **in that** the supporting ring (46) has at least one engagement formation (92), formed in addition to the bearing portion, for transmitting a torque from the multi-gear pinion assembly (44) to a hub body (18).

2. Multi-gear pinion assembly (40) according to Claim 1, **characterized in that** the engagement formation (92) is arranged radially outside the bearing portion.

3. Multi-gear pinion assembly (40) according to Claim 1 or 2, **characterized in that** the supporting ring (46) has as engagement formation (92) at least one recess which is designed, for torque transmission, to accommodate at least partially a torque transmission body (94).

4. Multi-gear pinion assembly (40) according to Claim 1 or 2, **characterized in that** the supporting ring has as engagement formation at least one projection which is designed, for torque transmission, to cooperate with a matching recess on a torque transmission body.

5. Multi-gear pinion assembly (40) according to Claim 3 or 4, **characterized in that** the supporting ring (46) and the torque transmission body are in positive mutual engagement.

6. Multi-gear pinion assembly (40) according to one of Claims 3 to 5, **characterized in that** the torque transmission body (96) is provided with or coupled to an overrunning clutch, via which it is connectable to the hub body (18) so as to transmit torque in a selective direction.

7. Multi-gear pinion assembly (40) according to one of the preceding claims, **characterized in that** the bearing portion is designed to accommodate a bearing (58, 90), in particular a rolling bearing.

8. Multi-gear pinion assembly (40) according to one of Claims 1 to 6, **characterized in that** the bearing portion is designed to accommodate a bearing ring (50, 120), to which a bearing (58, 90) is attachable.

9. Multi-gear pinion assembly (40) according to Claim 8, **characterized in that**, to fix the basic body (44) to the rear-wheel axle (12), the bearing ring (50) is capable of being plugged into the said basic body.

10. Multi-gear pinion assembly (40) according to Claim 8 or 9, **characterized by** a connecting tube (76) which extends from the supporting ring (46) to the basic body (44).

11. Multi-gear pinion assembly (40) according to Claim 10, **characterized in that** the connecting tube (76) is subjected to tensile load.

12. Multi-gear pinion assembly (40) according to Claim 10 or 11, **characterized in that** the bearing ring (50) is screwable via a thread formation (70) together with a mating thread formation (74) of the connecting tube (76).

13. Multi-gear pinion assembly (40) according to one of Claims 8 to 12, **characterized in that** the bearing ring (120) is provided with a mating engagement formation (94) which is engageable with the engagement formation (92) for torque transmission.

14. Multi-gear pinion assembly (40) according to one of the preceding claims, **characterized in that** the basic body (44) is designed conically and has some of the plurality of pinions (42₁-42₉) on its outer circumference.

15. Multi-gear pinion assembly (40) according to one of the preceding claims, **characterized in that** the basic body (44) is formed in one piece or is composed of a plurality of components connected firmly to one another.

16. Multi-gear pinion assembly (40) according to one of the preceding claims, **characterized in that** the supporting ring (46) is pressed, screwed or adhesively bonded together with the basic body (44).

17. Multi-gear pinion assembly (40) according to one of the preceding claims, **characterized in that** at least one pinion (42₁₀) of the plurality of pinions is arranged on the supporting ring (46).

18. Multi-gear pinion assembly (40) according to one of the preceding claims, **characterized in that** the supporting ring (46) is designed for the attachment of at least one further pinion.

19. Rear-wheel axle arrangement (10) for a bicycle, with
- a rear-wheel axle (12) which is designed to be fastened to a bicycle frame,
- a hub body (18) mounted rotatably on the rear axle (12),
- a multi-gear pinion assembly (40) according to one of the preceding claims which cooperates with a drive chain, and
- a torque transmission arrangement (96) for the directionally selective transmission of a torque from the multi-gear assembly (44) to the hub body (18) in order to drive the hub body (18),
the multi-gear pinion assembly (40) being mounted rotatably on the rear-wheel axle (12), and torque transmission to the torque transmission arrangement (96) being designed separately in space from the rotary mounting (58, 90).

## Revendications

1. Ensemble de pignons multiples (40) comprenant une pluralité de pignons (42₁-42₁₀) présentant différents nombres de dents pour le montage sur un essieu de roue arrière (12) d'une bicyclette, comportant
- un corps de base (44) sur lequel est prévue au moins une partie de la pluralité de pignons (42₁-42₁₀),
- une bague de support (46) reliée ou pouvant être reliée au corps de base (44) de manière à transmettre un couple,
**caractérisé en ce que** le corps de base (44) et la bague de support (46) sont réalisés, au niveau de leur région radialement intérieure, à chaque fois avec une section de palier radiale interne pour le montage à rotation sur l'essieu de roue arrière (12) de la bicyclette, et **en ce que** la bague de support (46) comprend au moins une formation d'engagement (92) réalisée en plus de la section de palier pour transmettre un couple de l'ensemble de pignons multiples (44) à un corps de moyeu (18).

2. Ensemble de pignons multiples (40) selon la revendication 1,
**caractérisé en ce que** la formation d'engagement (92) est disposée radialement à l'extérieur de la section de palier.

3. Ensemble de pignons multiples (40) selon la revendication 1 ou 2,
**caractérisé en ce que** la bague de support (46) comprend, en tant que formation d'engagement (92), au moins un évidement qui est réalisé pour recevoir au moins partiellement un corps de transmission de couple (94) en vue de la transmission de couple.

4. Ensemble de pignons multiples (40) selon la revendication 1 ou 2,
**caractérisé en ce que** la bague de support comprend, en tant que formation d'engagement, au moins une saillie qui est réalisée pour coopérer avec un évidement correspondant sur un corps de transmission de couple en vue de la transmission de couple.

5. Ensemble de pignons multiples (40) selon la revendication 3 ou 4,
**caractérisé en ce que** la bague de support (46) et le corps de transmission de couple sont en prise réciproque par engagement par complémentarité de forme.

6. Ensemble de pignons multiples (40) selon l'une quelconque des revendications 3 à 5,
**caractérisé en ce que** le corps de transmission de couple (96) est pourvu d'un accouplement à roue libre ou est accouplé à celui-ci, par le biais duquel accouplement à roue libre il peut être relié au corps de moyeu (18) de manière à transmettre un couple avec sélectivité directionnelle.

7. Ensemble de pignons multiples (40) selon l'une quelconque des revendications précédentes, **caractérisé en ce que** la section de palier est réalisée pour recevoir un palier (58, 90), en particulier un palier à roulement.

8. Ensemble de pignons multiples (40) selon l'une quelconque des revendications 1 à 6,
**caractérisé en ce que** la section de palier est réalisée pour recevoir une bague de palier (50, 120) sur laquelle peut être monté un palier (58, 90).

9. Ensemble de pignons multiples (40) selon la revendication 8,
**caractérisé en ce qu'**en vue de la fixation du corps de base (44) sur l'essieu de roue arrière (12), la bague de palier (50) peut être insérée dans ce corps de base.

10. Ensemble de pignons multiples (40) selon la revendication 8 ou 9,
**caractérisé par** un tube de liaison (76) qui s'étend à partir de la bague de support (46) jusqu'au corps de base (44).

11. Ensemble de pignons multiples (40) selon la revendication 10,
**caractérisé en ce que** le tube de liaison (76) est sollicité en traction.

12. Ensemble de pignons multiples (40) selon la revendication 10 ou 11,
**caractérisé en ce que** la bague de palier (50) peut être vissée par le biais d'une formation vissée (70) sur une formation vissée conjuguée (74) du tube de liaison (76).

13. Ensemble de pignons multiples (40) selon l'une quelconque des revendications 8 à 12,
**caractérisé en ce que** la bague de palier (120) est pourvue d'une formation d'engagement conjuguée (94) qui peut être amenée en prise avec la formation d'engagement (92) en vue de la transmission de couple.

14. Ensemble de pignons multiples (40) selon l'une quelconque des revendications précédentes,
**caractérisé en ce que** le corps de base (44) est conique et comprend sur sa périphérie extérieure une partie de la pluralité de pignons (42₁-42₉).

15. Ensemble de pignons multiples (40) selon l'une quelconque des revendications précédentes,
**caractérisé en ce que** le corps de base (44) est réalisé d'une seule pièce ou est composé d'une pluralité de composants reliés solidement les uns aux autres.

16. Ensemble de pignons multiples (40) selon l'une quelconque des revendications précédentes,
**caractérisé en ce que** la bague de support (46) est pressée, vissée ou collée sur le corps de base (44).

17. Ensemble de pignons multiples (40) selon l'une quelconque des revendications précédentes,
**caractérisé en ce qu'**au moins un pignon (42₁₀) de la pluralité de pignons est disposé sur la bague de support (46).

18. Ensemble de pignons multiples (40) selon l'une quelconque des revendications précédentes,
**caractérisé en ce que** la bague de support (46) est réalisée pour le montage d'au moins un pignon supplémentaire.

19. Ensemble d'essieu de roue arrière (10) pour une bicyclette, comprenant
- un essieu de roue arrière (12) qui est réalisé en vue de la fixation à un cadre de bicyclette,
- un corps de moyeu (18) monté à rotation sur l'essieu arrière (12),
- un ensemble de pignons multiples (40) selon l'une quelconque des revendications précédentes coopérant avec une chaîne d'entraînement et
- un ensemble de transmission de couple (96) en vue de la transmission à sélectivité directionnelle d'un couple de l'ensemble de pignons multiples (44) au corps de moyeu (18), afin d'entraîner le corps de moyeu (18),
l'ensemble de pignons multiples (40) étant monté à rotation sur l'essieu de roue arrière (12), et la transmission de couple étant réalisée sur l'ensemble de transmission de couple (96) de manière séparée spatialement du palier rotatif (58, 90).
